# EUROPÄISCHE PATENTSCHRIFT

(11) **EP 2 093 031 B1**
(45) Veröffentlichungstag und Bekanntmachung des Hinweises auf die Patenterteilung: **09.09.2015**
(21) Anmeldenummer: 09153003.0
(22) Anmeldetag: 17.02.2009
(51) Int. Cl.: B27D 5/00, B29C 63/00, B32B 3/02

(54) **Verfahren und Vorrichtung zum Veredeln eines Werkstücks**
Device and method for finishing a workpiece
Procédé et dispositif destinés à finir une pièce à usiner

(30) Priorität: 19.02.2008 DE 102008009767
(43) Veröffentlichungstag der Anmeldung: 26.08.2009
(73) Patentinhaber: Homag Holzbearbeitungssysteme AG, 72296 Schopfloch (DE)
(72) Erfinder: Schmid, Johannes, 72181, Starzach-Wachendorf (DE)
(74) Vertreter: Hoffmann Eitle

(56) Entgegenhaltungen:
- EP-A1- 1 655 119
- EP-A2- 2 093 031
- EP-A2- 2 147 773
- FR-A- 1 530 769

## Beschreibung

### Technisches Gebiet

Die Erfindung betrifft ein Verfahren zum Veredeln eines Werkstücks, gemäß dem Oberbegriff des Anspruchs 1 und eine Vorrichtung zur Durchführung des Verfahren des Anspruchs 1 gemäß dem Oberbegriff des Anspruchs 8. Ein solches Verfahren und ein solche Vorrichtung sind aus EP 1655119 bekannt.

### Stand der Technik

Werkstücke der hier zur Rede stehenden Art finden verbreitet Anwendung, beispielsweise zur Herstellung von Türen, Möbelteilen, Bauelementen oder dergleichen. Um die Werkstücke mit möglichst geringem Materialeinsatz und in vielen Fällen auch mit möglichst geringem Gewicht herzustellen, weisen diese Werkstücke senkrecht zu ihrer Erstreckungsrichtung eine veränderliche Dichte auf, so dass sie sich in Decklagen mit höherer (mittlerer) Dichte und Kernlage(n) mit geringerer (mittlerer) Dichte aufteilen lassen.

Dabei kann es sich sowohl um einstückige Werkstücke als auch um Werkstücke mit einem Sandwichaufbau handeln. Beispiele für einstückige Werkstücke sind Span- oder MDF-Platten, zu den Werkstücken mit einem Sandwichaufbau zählen beispielsweise Platten, bei denen eine Kernlage aus sehr leichtem Füllmaterial wie Papierwaben oder Hartschaum zwischen zwei Decklagen aus Spanplatte oder dergleichen angeordnet ist. Auch völlig andere Materialien sind denkbar.

Ein Verfahren zum Veredeln einer Leichtbauplatte ist beispielsweise in der WO 2004/085152 A1 offenbart. Bei diesem Verfahren wird zunächst eine Leichtbauplatte formatiert (in die gewünschte Rohform gebracht). Anschließend wird im Bereich der Schmalseite der Leichtbauplatte eine Ausnehmung eingefräst, und zwar sowohl in die Decklagen als auch in die Kernlage. Abschließend wird eine Stützkante in die Ausnehmung eingeleimt, die mit einer Dekorkante versehen ist oder noch versehen wird.

Da das Vorhalten und Zuführen der Stützkante einen erheblichen logistischen Aufwand erfordert, wird in der WO 2004/085152 A1 auch vorgeschlagen, den Kantenverschluss der Platte durch Umklappen einer der Decklagen herzustellen, wobei zu diesem Zweck vorher eine Gehrungsnut in die entsprechende Decklage eingebracht wird. Ein entsprechendes Verfahren ist auch in der EP 1655119 A offenbart. Allerdings hat sich gezeigt, dass sich die Durchführung des Verfahrens kompliziert und aufwändig gestaltet, insbesondere da eine aufwändigen, mehrstufige Bearbeitung zur Herstellung der Gehrungsnut und Anlageflächen erforderlich ist. Ferner ist die Stabilität der so hergestellten Leichtbauplatte nicht optimal.

### Darstellung der Erfindung

Es ist Aufgabe der vorliegenden Erfindung, ein Verfahren zum Veredeln eines Werkstücks der hier zur Rede stehenden Art bereitzustellen, das ein einfaches Veredeln eines Werkstücks mit hoher Stabilität ermöglicht. Ferner ist es Aufgabe der Erfindung, eine Vorrichtung bereitzustellen, die bei einfacher Konstruktion eine zügige Durchführung des Verfahrens ermöglicht.

Diese Aufgabe wird erfindungsgemäß durch ein Verfahren nach Anspruch 1 sowie eine Vorrichtung nach Anspruch 7 gelöst. Besonders vorteilhafte Weiterbildungen der Erfindung sind in den abhängigen Ansprüchen angegeben.

Das erfindungsgemäße Verfahren weist folgende Schritte auf:
Bereitstellen mindestens eines Werkstücks mit zwei Decklagen und mindestens einer zwischen den Decklagen angeordneten Kernlage, die bevorzugt eine geringere mittlere Dichte aufweist als die Decklagen,
Abtrennen eines Abschnitts mindestens einer Decklage eines Werkstücks, und
Anbringen, insbesondere Anhaften, des abgetrennten Abschnitts an einer Schmalfläche eines Werkstücks als Verschluss-, Stütz- und/oder Dekorkante.

Durch das vollständige Abtrennen des jeweiligen Abschnitts einer Decklage wird es möglich, die Bearbeitung mit einfachen Mitteln (z. B. Säge) in einem einzigen Arbeitsschritt auszuführen, was den Verfahrensablauf und die entsprechende Vorrichtung extrem vereinfacht. Darüber hinaus kann der abgetrennte Abschnitt anschließend auf herkömmliche Weise weiterverarbeitet werden, d. h. beispielsweise wie ein separat zugeführtes Material. Dies ermöglicht auch, dass bestehende Maschinen problemlos auf das erfindungsgemäße Verfahren umgerüstet werden können.

Weiterhin sorgt das vollständige Abtrennen des jeweiligen Abschnitts dafür, dass der abgetrennte Abschnitt in Abstimmung auf die jeweiligen Anforderungen optimal in das Werkstück eingebunden und beispielsweise in den Bereich zwischen den Decklagen eingebracht und verleimt werden kann. Hierdurch lässt sich ein Werkstück mit optimaler Stabilität und Steifigkeit herstellen.

Nicht zuletzt vermeidet das vollständige Abtrennen des jeweiligen Abschnitts die Nachbearbeitung einer Sollbruchstelle, wie sie im Stand der Technik bei Ausführungen mit Gehrungsnut vorkommt.

Der abgetrennte Abschnitt kann im Rahmen der vorliegenden Erfindung nach dem Abtrennen auf unterschiedliche Art und Weise gehandhabt werden. Dabei ist gemäß einer Weiterbildung der Erfindung vorgesehen, dass der abgetrennte Abschnitt nach dem Abtrennen im Wesentlichen senkrecht zur Abtrennfläche verschoben wird. Hierdurch kann der abgetrennte Abschnitt leicht und ohne Kollision mit dem jeweiligen Werkstück aufgerichtet und für das spätere Anbringen des abgetrennten Abschnitts an einem Werkstück vorbereitet werden.

Der abgetrennte Abschnitt kann je nach Verfahrensablauf an jedem beliebigen Werkstück innerhalb desselben Produktionsprozesses angebracht werden. Im Hinblick auf eine homogene Struktur des zu veredelnden Werkstücks sowie einen geringen Koordinationsbedarf ist es gemäß einer Weiterbildung der Erfindung jedoch vorgesehen, dass der abgetrennte Abschnitt an demselben Werkstück bzw. Werkstückbereich angebracht wird, von welchem er abgetrennt wurde.

Ferner ist gemäß einer Weiterbildung der Erfindung vorgesehen, dass vor dem Abtrennen des Abschnitts zumindest ein Teil der an den abzutrennenden Abschnitt angrenzenden Kernlage durchtrennt und beseitigt wird. Auf diese Weise wird ein sauberes Abtrennen des jeweiligen Abschnitts sowie eine störungsfreie und verschmutzungsarme Weiterverarbeitung des abgetrennten Abschnitts ermöglicht.

Gemäß einer Weiterbildung der Erfindung ist ferner vorgesehen, dass von beiden Decklagen jeweils ein Abschnitt abgetrennt wird, und zwar bevorzugt simultan. Hierdurch wird das in den Prozess eingeführte Material optimal genutzt, und es fällt weniger Zerspanungsarbeit an. Dabei kann es beispielsweise sinnvoll sein, Decklagenabschnitte jeweils von den Längsseiten der Werkstücke abzutrennen, um anschließend einen abgetrennten Abschnitt für die Längsseite und einen abgetrennten Abschnitt für die Querseite des Werkstücks zu verwenden.

Gemäß einer Weiterbildung der Erfindung ist ferner vorgesehen, dass im Bereich der Schmalfläche des Werkstücks zumindest ein Aufnahmeabschnitt ausgefräst und anschließend der abgetrennte Abschnitt zumindest abschnittsweise darin aufgenommen wird. Hierdurch ergibst sich eine präzise definierte Verbindung des abgetrennten Abschnitts mit dem Werkstück, die diesem eine hohe Stabilität und ein ansprechendes Erscheinungsbild bei geringem Nachbearbeitungsaufwand verleiht.

Um insgesamt einen zügige, kontinuierlichen und störungsfreien Verfahrensablauf zu erreichen, ist gemäß einer Weiterbildung der Erfindung vorgesehen, dass die Bearbeitung im Durchlauf ausgeführt wird.

Eine besonders vorteilhafte Vorrichtung zur Durchführung des erfindungsgemäßen Verfahrens ist Gegenstand von Anspruch 8. Diese ermöglicht insbesondere aufgrund ihrer Aufrichteinrichtung zum Verschieben und Ausrichten des abgetrennten Abschnitts die Vermeidung von Störungen und Kollisionen sowie die Anbindung der Vorrichtung an bestehende, herkömmliche Vorrichtungen zum Herstellen von Leichtbauplatten. Die oben diskutierten Vorteile können daher auf besonders einfache und zügige Weise realisiert werden.

Gemäß einer Weiterbildung der erfindungsgemäßen Vorrichtung ist vorgesehen, dass die Ausrichteinrichtung eine Verschiebeeinrichtung zum Verschieben des abgetrennten Abschnitts quer zur Durchlaufrichtung aufweist. Hierdurch lassen sich Störungen zwischen Werkstück und abgetrenntem Abschnitt vermeiden, und es kann ein kollisionsfreies Auf- bzw. Ausrichten des abgetrennten Werkstücks vorbereitet werden.

In diesem Zusammenhang ist gemäß einer Weiterbildung der Erfindung ferner vorgesehen, dass die Ausrichteinrichtung eine Aufstelleinrichtung zum Drehen des abgetrennten Abschnitts um seine Längsachse aufweist. Hierdurch lässt sich der abgetrennte Abschnitt optimal auf die nachfolgenden Bearbeitungen vorbereiten, wobei sich diese Konfiguration optimal für das Nachrüsten bestehender Maschinen bzw. Maschinenkonzepte erwiesen hat.

Gemäß einer Weiterbildung der Erfindung ist darüber hinaus vorgesehen, dass die Vorrichtung ferner eine Formatbearbeitungseinrichtung aufweist, die bevorzugt der Trenneinrichtung vorgelagert ist. Diese ermöglicht eine Freilegung des abgetrennten Abschnitts sowie gleichzeitig eine Formatierung des Werkstücks, das auf diese Weise bereits vollständig für das nachfolgende Abtrennen und Wiederanbringen des Abschnitts der Deckfläche vorbereitet ist. Alternativ oder zusätzlich kann die Formatbearbeitungseinrichtung auch eingerichtet sein, im Bereich der Schmalfläche des Werkstücks zumindest einen Aufnahmeabschnitt auszufräsen, damit anschließend der abgetrennte Abschnitt zumindest abschnittsweise darin aufgenommen werden kann.

### Kurze Beschreibung der Zeichnungen

- Fig. 1: zeigt schematisch eine Seitenansicht und eine Draufsicht einer Ausführungsform der erfindungsgemäßen Vorrichtung;
- Fig. 2: zeigt schematisch Verfahrensschritte einer Ausführungsform des erfindungsgemäßen Verfahrens.

### Ausführliche Beschreibung bevorzugter Ausführungsformen

Bevorzugte Ausführungsformen der vorliegenden Erfindung werden nachfolgen ausführlich unter Bezugnahme auf die begleitenden Zeichnungen beschrieben.

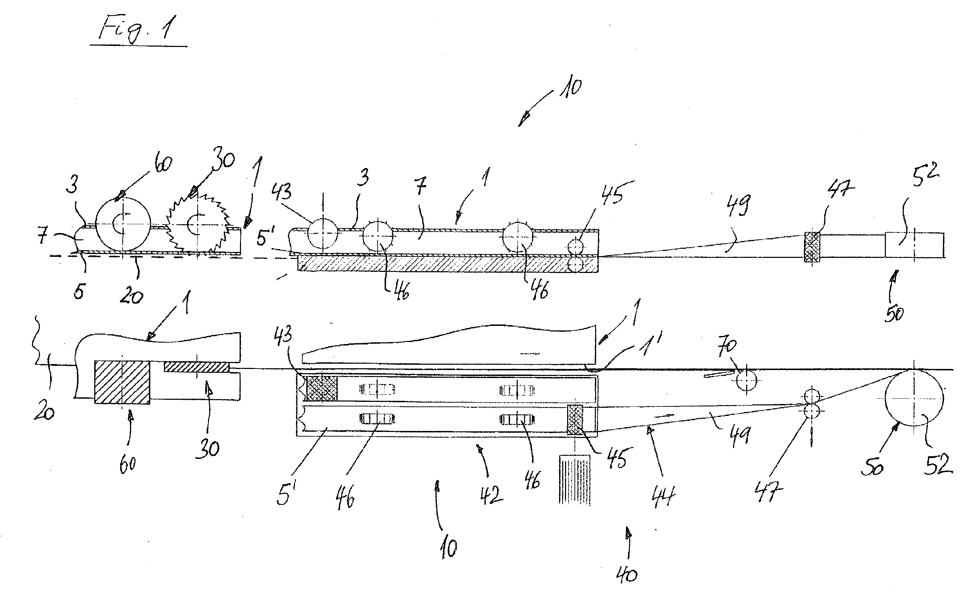

Eine Vorrichtung 10 zum Veredeln eines Werkstücks als bevorzugte Ausführungsform der vorliegenden Erfindung ist in Fig. 1 schematisch in einer Seitenansicht und einer Draufsicht gezeigt. Die Vorrichtung 10 dient primär zum Veredeln von Werkstücken 1, die zwei dünnwandige Decklagen 3, 5 und mindestens eine zwischen den Decklagen 3, 5 angeordnete Kernlage 7 aufweist. Dabei kann es sich einerseits um Werkstücke mit einem Sandwichaufbau handeln, wie beispielsweise Platten, bei denen eine Kernlage aus sehr leichtem Füllmaterial wie Papierwaben oder Hartschaum zwischen zwei Decklagen aus Spanplatte oder dergleichen angeordnet ist. Alternativ eignet sich die erfindungsgemäße Vorrichtung ebenso zum Veredeln einstückiger Werkstücke, wie beispielsweise Span- oder MDF-Platten, die eine Dichtegradiente senkrecht zur flächigen Erstreckung des Werkstücks besitzen, sodass die Kernlage eine geringe mittlere Dichte aufweist als die Decklagen.

Die in Fig. 1 gezeigte Vorrichtung 10 besitzt zunächst eine Fördereinrichtung 20 zum Fördern der Werkstücke 1 in einer Durchlaufrichtung (von links nach rechts in Fig. 1), die beispielsweise als Riemen- oder Rollenförderer ausgestaltet sein kann.

Entlang der Fördereinrichtung 20 sind in Durchlaufrichtung verschiedene Bearbeitungseinrichtungen angeordnet. So umfasst die Vorrichtung 10 zunächst eine Formatbearbeitungseinrichtung 60, die beispielsweise als Fräser ausgebildet sein kann. Nach der Formatbearbeitungsvorrichtung 60 folgt eine Trenneinrichtung 30 zum Abtrennen eines Abschnitts 5' mindestens einer Decklage 5 des jeweiligen Werkstücks 1, die in der vorliegenden Ausführungsform als Säge ausgebildet ist, obgleich auch andere Trenneinrichtungen zum Einsatz kommen können.

An die Trenneinrichtung 30 schließt sich eine Ausrichteinrichtung 40 zum Verschieben und Ausrichten des abgetrennten Abschnitts 5' an. Diese besitzt zunächst eine Verschiebeeinrichtung 42 zum Verschieben des abgetrennten Abschnitts 5' quer zur Durchlaufrichtung (von oben nach unten in Fig. 1). Zu diesem Zweck umfasst die Verschiebeeinrichtung 42 in der vorliegenden Ausführungsform zunächst eine (oder mehrere) Bremsrolle(n), die den abgetrennten Abschnitt 5' nach dem Abtrennvorgang in Durchlaufrichtung abbremsen. Ferner sind in der Verschiebeeinrichtung 42 mehrere Verschiebeelemente 46 angeordnet, die quer zur Durchlaufrichtung verfahrbar sind, sodass die den abgetrennten Abschnitt 5' aufgreifen und quer zur Durchlaufrichtung verschieben können.

Weiterhin umfasst die Verschiebeeinrichtung 42 mindestens eine Transportrolle 45, die eingerichtet ist, den jeweiligen abgetrennten Abschnitt 5 nach dem Verschiebevorgang durch die Verschiebeelemente 46 in Durchlaufrichtung anzutreiben und einer nachgelagerten Aufstelleinrichtung 44 zuzuführen.

Die Aufstelleinrichtung 44 dient zum Drehen des abgetrennten Abschnitts 5' um seine Längsachse und weist zu diesem Zweck in der vorliegenden Ausführungsform ein Führungsblech 49 auf. Dieses dreht den abgetrennten Abschnitt 5' beispielsweise um 90° und führt ihn einer weiteren Transportrolle (bzw. Transportrollenpaar) 47 zu.

Der Ausrichteinrichtung 40 und deren Aufstelleinrichtung 44 nachgelagert ist eine Anbringeinrichtung 50 zum Anbringen des abgetrennten Abschnitts 5' an einer Schmalfläche 1' des jeweiligen Werkstücks 1. Dabei ist die Anbringbeinrichtung in der vorliegenden Ausführungsform primär durch eine Andruck- und Förderwalze 52 gebildet.

Weiterhin weist die erfindungsgemäße Vorrichtung 10 in der vorliegenden Ausführungsform eine Leimauftragseinrichtung 70 auf, die eingerichtet ist, die jeweilige Schmalfläche 1' mit Leim oder einem anderen Haftmittel zu versehen, bevor der jeweilige abgetrennte Abschnitt 5' an der Schmalfläche 1' angebracht wird. Dabei ist es selbstverständlich ebenso möglich, auch den jeweiligen abgetrennten Abschnitt 5' mit einem Haftmittel zu versehen.

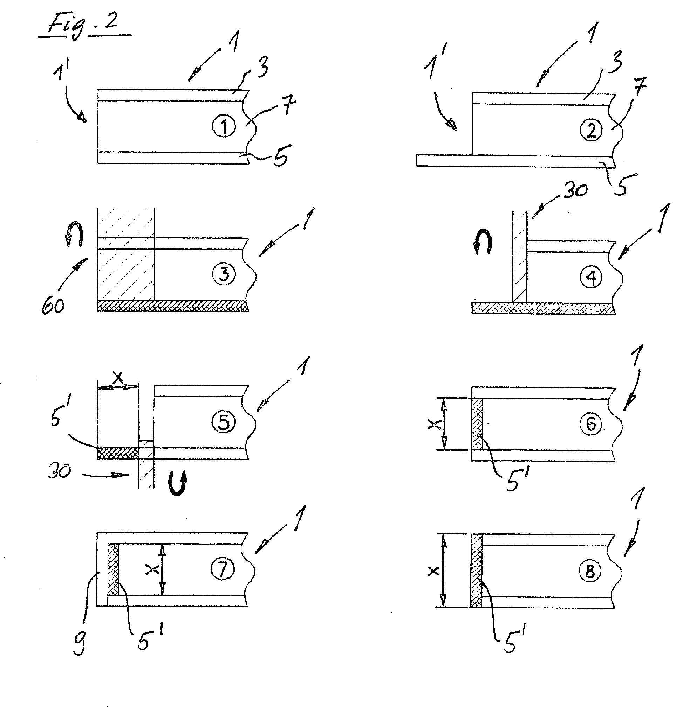

Der Betrieb der erfindungsgemäßen Vorrichtung bzw. das erfindungsgemäße Verfahren wird nachfolgend weiterführend unter Bezugnahme auf Fig. 2 erläutert. In Fig. 2 sind mehrere Schnittansichten des zu veredelnden Werkstücks 1 gezeigt und mit Nummern gekennzeichnet, wobei die Nummern nicht notwendigerweise die Reihenfolge der Verfahrensschritte angeben. Nr. 1 zeigt zunächst ein beispielhaftes, zu veredelndes Werkstück 1 mit Decklagen 3, 5 und Kernlage 7. Alternativ kann auch von einem unter Nr. 2 gezeigten Werkstück ausgegangen werden, bei welchem eine der Decklagen 5 über die anderen Lagen des Werkstücks 2 hervorsteht.

Bei Einsatz eines unter Nr. 1 gezeigten Werkstücks wird mit Nr. 3 fortgefahren, indem ein Teil der oberen Decklage 3 sowie die darunter liegende Kernlage 7 abgetragen wird, um die wiederum darunter liegende Decklage 5 freizulegen und ein Werkstück zu erhalten, das prinzipiell dem unter Nr. 2 gezeigten entspricht.

Wie unter Nr. 4 gezeigt, wird anschließend ein Abschnitt 5' der unteren Decklage 5 mittels der Abtrenneinrichtung 30 abgetrennt, wobei der abgetrennte Abschnitt 5' in der vorliegenden Ausführungsform eine Breite X aufweist. Dabei kann die Abtrenneinrichtung, wie unter Nr. 5 gezeigt, ebenso unterhalb des Werkstücks 1 angeordnet sein.

Anschließend wird, wie bereits unter Bezugnahme auf Fig. 1 beschrieben, der abgetrennte Abschnitt 5' quer zur Durchlaufrichtung mittels der Verschiebeeinrichtung 42 verschoben und darüber hinaus mittels der Aufstelleinrichtung 44 um seine Längsachse gedreht. Gleichzeitig wird das Werkstück 1 auf der Fördereinrichtung 20 weiter gefördert.

Der verschobene und um seine Längsachse gedrehte, abgetrennte Abschnitt 5' kann nun mittels der Anbringeinrichtung 50 an die beleimte Schmalfläche 1' angebracht werden, wobei je nach Einstellung der Transportgeschwindigkeiten der Fördereinrichtung 20 bzw. der Transportrollen 45 und 47 der abgetrennte Abschnitt 5' an demselben Werkstück bzw. Werkstückbereich, von welchem er abgetrennt wurde, oder an anderer Stelle angebracht werden kann.

Dabei kann der abgetrennte Abschnitt 5', wie unter Nr. 6 in Fig. 2 gezeigt, beispielsweise als Stützkante zwischen den Decklagen 3, 5 des Werkstücks 1 eingebracht werden, wobei zu diesem Zweck ein entsprechender Aufnahmeabschnitt (nicht gezeigt) in die Kernlage 7 einfräst werden kann. Dies bietet sich insbesondere bei einstückigen Werkstücken wie Span- oder MDF-Platten an. Das Einfräsen einer Ausnehmung ist jedoch in vielen Fällen nicht erforderlich, beispielsweise bei nachgiebigen oder leicht zerstörbaren Kernlagen 7 aus Papier, Leichtschaum oder dergleichen. In diesen Fällen kann es allerdings sinnvoll sein, die Kernlage lokal von den Decklagen zu lösen oder andere geeignete Schwächungen in der Kernlage vorzusehen.

Anschließend kann das Werkstück 1, wie unter Nr. 7 in Fig. 2 gezeigt, mit einer Dekorkante 9 versehen werden. Alternativ ist es ebenso möglich, den abgetrennten Abschnitt 5' als Verschluss- und gegebenenfalls gleichzeitig auch als Dekorkante zu verwenden, wie unter Nr. 8 in Fig. 2 gezeigt.

Obgleich in den obigen Ausführungsformen ein Werkstück mit separaten Deck- und Kernlagen Bezug genommen wurde, ist die vorliegende Erfindung, wie obenstehend bereits erläutert, auch auf einstückige Werkstücke wie beispielsweise Span- oder MDF-Platten oder Platten aus anderen geeigneten Materialen anwendbar. In diesem Falle lässt sich das Werkstück gedanklich in Decklagen mit höherer Dichte und mindestens eine Kernlage mit geringerer (mittlerer) Dichte aufteilen. Die Dicke des als Decklage abzutrennenden Abschnitts 5' ergibt sich dann aus den jeweiligen Anforderungen, beispielsweise der gewünschten Festigkeit des abgetrennten Abschnitts 5' oder der gewünschten Geometrie des abgetrennten Abschnitts 5'.

Obgleich in den Figuren nicht gezeigt, ist es im Rahmen der vorliegenden Erfindung ebenso möglich, dass von beiden Decklagen 3, 5 jeweils ein Abschnitt abgetrennt wird, und zwar bevorzugt simultan, beispielsweise mittels der Trenneinrichtung 30. In diesem Falle könnte die Formatbearbeitungseinrichtung 60 dazu verwendet werden, vorab die Kernlage 7 zu beseitigen, sodass man nach der Bearbeitung durch die Trenneinrichtung 30 zwei abgetrennte Abschnitte der Decklagen erhält.

## Patentansprüche

1. Verfahren zum Veredeln eines Werkstücks (1), mit den Schritten:
Bereitstellen mindestens eines Werkstücks (1) mit zwei Decklagen (3, 5) und mindestens einer zwischen den Decklagen (3, 5) angeordneten Kernlage (7), die bevorzugt eine geringere mittlere Dichte aufweist als die Decklagen,
**dadurch gekennzeichnet, daß** das Verfahren auch einschliesst:
Abtrennen eines Abschnitts (5') mindestens einer Decklage (5) des Werkstücks, und
Anbringen, insbesondere Anhaften, des abgetrennten Abschnitts (5') an einer Schmalfläche (1') des Werkstücks (1) als Verschluss-, Stütz- und/oder Dekorkante.

2. Verfahren nach Anspruch 1, **dadurch gekennzeichnet, dass** der abgetrennte Abschnitt (5') nach dem Abtrennen im wesentlichen senkrecht zur Abtrennfläche (1') verschoben wird.

3. Verfahren nach Anspruch 1 oder 2, **dadurch gekennzeichnet, dass** der abgetrennte Abschnitt (5') an demselben Werkstück bzw. Werkstückbereich (1') angebracht wird, von welchem er abgetrennt wurde.

4. Verfahren nach einem der vorhergehenden Ansprüche,
**dadurch gekennzeichnet, dass** vor dem Abtrennen des Abschnitts (5') zumindest ein Teil der an den abzutrennenden Abschnitt angrenzenden Kernlage (7) durchtrennt oder beseitigt wird.

5. Verfahren nach einem der vorhergehenden Ansprüche,
**dadurch gekennzeichnet, dass** von beiden Decklagen jeweils ein Abschnitt abgetrennt wird, und zwar bevorzugt simultan.

6. Verfahren nach einem der vorhergehenden Ansprüche,
**dadurch gekennzeichnet, dass** im Bereich der Schmalfläche des Werkstücks zumindest ein Aufnahmeabschnitt ausgefräst und anschließend der abgetrennte Abschnitt zumindest abschnittsweise darin aufgenommen wird.

7. Verfahren nach einem der vorhergehenden Ansprüche,
**dadurch gekennzeichnet, dass** die Bearbeitung im Durchlauf ausgeführt wird.

8. Vorrichtung (10) zur Durchführung des Verfahrens nach einem der vorhergehenden Ansprüche, mit:
einer Fördereinrichtung (20) zum Fördern Werkstücke (1) in einer Durchlaufrichtung,
**dadurch gekennzeichnet, daß** die Vorrichtung einschliesst:
eine Trenneinrichtung (30) zum Abtrennen eines Abschnitts (5') mindestens einer Decklage (5) eines Werkstücks,
eine Ausrichteinrichtung (40) zum Verschieben und Ausrichten des abgetrennten Abschnitts (5'), und
eine Anbringeinrichtung (50) zum Anbringen des abgetrennten Abschnitts (5') an einer Schmalfläche (1') des Werkstücks (1).

9. Vorrichtung nach Anspruch 8, **dadurch gekennzeichnet, dass** die Ausrichteinrichtung (40) eine Verschiebeeinrichtung (42) zum Verschieben des abgetrennten Abschnitts (5') quer zur Durchlaufrichtung aufweist.

10. Vorrichtung nach Anspruch 8 oder 9, **dadurch gekennzeichnet, dass** die Ausrichteinrichtung (40) eine Aufstelleinrichtung (44) zum Drehen des abgetrennten Abschnitts (5') um seine Längsachse aufweist.

11. Vorrichtung nach einem der Ansprüche 8 bis 10, **dadurch gekennzeichnet, dass** sie ferner eine Formatbearbeitungseinrichtung (60) aufweist, die bevorzugt der Trenneinrichtung (30) vorgelagert ist.

## Claims

1. Method for finishing a workpiece (1), having the steps of:
providing at least one workpiece (1) having two surface layers (3, 5) and at least one core layer (7) which is arranged between the surface layers (3, 5) and which preferably has a lower average density than the surface layers,
**characterised in that** the method also includes:
separating a section (5') of at least one surface layer (5) of the workpiece, and
applying, in particular adhering, the separated section (5') to a narrow surface (1') of the workpiece (1) as a closing, supporting and/or decorative edge.

2. Method according to claim 1, **characterised in that** after separation the separated section (5') is displaced substantially perpendicularly to the separation surface (1').

3. Method according to claim 1 or 2, **characterised in that** the separated section (5') is applied to the same workpiece or workpiece region (1') from which it was separated.

4. Method according to any of the preceding claims, **characterised in that**, before separation of the section (5'), at least a portion of the core layer (7) adjoining the section to be separated is cut through or removed.

5. Method according to any of the preceding claims, **characterised in that** a section is separated from each of the two surface layers, this being preferably simultaneously.

6. Method according to any of the preceding claims, **characterised in that** in the region of the narrow surface of the workpiece at least one receiving section is machined away and then the separated section is received therein in at least one section.

7. Method according to any of the preceding claims, **characterised in that** machining is carried out during continuous transport.

8. Apparatus (10) for carrying out the method according to any of the preceding claims, having:
a conveying device (20) for conveying workpieces (1) in a throughput direction,
**characterised in that** the apparatus includes:
a separating device (30) for separating a section (5') of at least one surface layer (5) of a workpiece,
an aligning device (40) for displacing and aligning the separated section (5'), and
an applying device (50) for applying the separated section (5') to a narrow surface (1') of the workpiece (1).

9. Apparatus according to claim 8, **characterised in that** the aligning device (40) has a displacing device (42) for displacing the separated section (5') transversely to the throughput direction.

10. Apparatus according to claim 8 or 9, **characterised in that** the aligning device (40) has an erecting device (44) for rotating the separated section (5') about its longitudinal axis.

11. Apparatus according to any of claims 8 to 10, **characterised in that** it further has a formatting device (60) which is preferably mounted in front of the separating device (30).

## Revendications

1. Procédé d'amélioration d'une pièce (1), comprenant les étapes suivantes :
préparation d'au moins une pièce (1) avec deux couches de revêtement (3, 5) et au moins une couche centrale (7) disposée entre les couches de revêtement (3, 5) et présentant préférentiellement une densité moyenne inférieure à celle des couches de revêtement,
**caractérisé en ce que** ledit procédé comprend également :
le détachement d'une section (5') d'au moins une couche de revêtement (5) de la pièce, et
l'application, en particulier par adhérence, de la section détachée (5') contre un chant de la pièce (1') en tant que bord de fermeture, d'appui et/ou bord décoratif.

2. Procédé selon la revendication 1, **caractérisé en ce que** la section détachée (5') est après séparation déplacée sensiblement perpendiculairement à la surface de séparation (1').

3. Procédé selon la revendication 1 ou 2, **caractérisé en ce que** la section détachée (5') est appliquée contre la même pièce ou zone de pièce (1') dont elle a été séparée.

4. Procédé selon l'une des revendications précédentes, **caractérisé en ce qu'**au moins une partie de la couche centrale (7) adjacente à la section à détacher est découpée ou éliminée avant séparation de la section (5').

5. Procédé selon l'une des revendications précédentes, **caractérisé en ce qu'**une section est détachée de chacune des deux couches de revêtement, et cela de préférence simultanément.

6. Procédé selon l'une des revendications précédentes, **caractérisé en ce qu'**au moins une section de réception est ménagée par fraisage dans la zone du chant de la pièce, la section détachée étant ensuite logée au moins en partie dans celle-ci.

7. Procédé selon l'une des revendications précédentes, **caractérisé en ce que** l'usinage est effectué en continu.

8. Dispositif (10) pour l'exécution du procédé selon l'une des revendications précédentes, avec :
un dispositif de transport (20) pour le transport des pièces (1) dans une direction de défilement,
**caractérisé en ce que** ledit dispositif comprend :
un dispositif de détachement (30) pour le détachement d'une section (5') d'au moins une couche de revêtement (5) d'une pièce,
un dispositif d'ajustement (40) pour le déplacement et l'alignement de la section détachée (5'), et
un dispositif d'application (50) pour l'application de la section détachée (5') contre un chant (1') de la pièce (1).

9. Dispositif selon la revendication 8, **caractérisé en ce que** le dispositif d'ajustement (40) comprend un dispositif de déplacement (42) pour le déplacement de la section détachée (5') transversalement à la direction de défilement.

10. Dispositif selon la revendication 8 ou 9, **caractérisé en ce que** le dispositif d'ajustement (40) comprend un dispositif de redressement (44) pour la rotation de la section détachée (5') autour de son axe longitudinal.

11. Dispositif selon l'une des revendications 8 à 10, **caractérisé en ce que** celui-ci comprend en outre un dispositif de façonnage (60) situé préférentiellement en amont du dispositif de détachement (30).
